(19) Europäisches Patentamt
European Patent Office
Office européen des brevets

(11) EP 1 910 470 B1

(12) **EUROPEAN PATENT SPECIFICATION**

(45) Date of publication and mention of the grant of the patent:
**25.03.2009 Bulletin 2009/13**

(21) Application number: **06762507.9**

(22) Date of filing: **08.07.2006**

(51) Int Cl.:
***C08L 69/00*** (2006.01) ***C08L 55/02*** (2006.01)

(86) International application number:
**PCT/EP2006/006705**

(87) International publication number:
**WO 2007/009622 (25.01.2007 Gazette 2007/04)**

(54) **POLYCARBONATE MOLDING COMPOSITIONS**

POLYCARBONAT-FORMMASSEN

COMPOSITIONS POUR MOULAGE DE POLYCARBONATE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.07.2005 US 186339**

(43) Date of publication of application:
**16.04.2008 Bulletin 2008/16**

(73) Proprietor: **Bayer MaterialScience AG**
**51368 Leverkusen (DE)**

(72) Inventors:
- **SEIDEL, Andreas**
  **41542 Dormagen (DE)**
- **WITTMANN, Dieter**
  **51375 Leverkusen (DE)**
- **HAGER, Bruce, L.**
  **Canonsburg, PA 15317 (US)**
- **MICHELS, Gisbert**
  **51375 Leverkusen (DE)**

(56) References cited:
**WO-A-99/11713**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 910 470 B1

## Description

### Field of the Invention

The invention relates to thermoplastic molding compositions and in particular to impact-modified, hydrolysis-resistant polycarbonate compositions.

### Background of the Invention

Thermoplastic molding compositions containing polycarbonates and ABS (acrylonitrile/butadiene/styrene) have been known for a long time. Thus, US 3 130 177 A describes readily processable molding compositions of polycarbonates and graft polymers of monomer mixtures of acrylonitrile and an aromatic vinyl hydrocarbon on polybutadiene.

WO 91/18052 A1 discloses PC/ABS compositions having a high heat stability, which are characterized in that the graft polymers have a sodium ion and potassium ion content of less than 1,500 ppm, preferably less than 800 ppm, and comprise a certain amount of antioxidants. The lithium ion content of the composition or graft polymer is not disclosed.

WO 99/11713 A1 discloses flameproofed PC/ABS compositions having an improved resistance to moisture and at the same time a high level of mechanical properties, which are characterized in that the graft polymers have a content of alkali metals of less than 1 ppm. In particular, the sodium ion and potassium ion content of the graft polymer should be less than 1 ppm. The lithium ion content of the composition or graft polymer is not disclosed.

WO 00/39210 A1 discloses impact-modified flameproofed PC compositions comprising a reinforcing substance which have an improved resistance to moisture and at the same time a high level of mechanical properties, which are characterized in that the styrene resins have a content of alkali metals of less than 1 ppm. In particular, the sodium ion and potassium ion content of the styrene resin should be less than 1 ppm. The lithium ion content of the composition or styrene resin is not disclosed. An object of the invention is to provide PC/ABS molding compositions having an improved stability to hydrolysis for the production of complex moldings.

### Summary of the Invention

An impact modified thermoplastic molding composition comprising aromatic polycarbonate and/or polyester carbonate and a rubber-modified graft polymer prepared by the bulk, solution or bulk-suspension polymerization process is disclosed. The composition that is characterized by its low content of lithium ions features improved hydrolytic resistance.

### Detailed Description of the Invention

It has been found that impact-modified polycarbonate compositions having a low content of lithium ions have a significantly better resistance to hydrolysis than comparable compositions having a relatively high content of lithium ions. This is surprising, in particular, since the content of other alkali metal or alkaline earth metal ions (such as, for example, those of sodium, potassium, magnesium or calcium) does not influence the resistance of the compositions to hydrolysis to a comparable extent.

The present invention therefore provides thermoplastic molding compositions comprising

A) aromatic polycarbonate and/or polyester carbonate and

B) a rubber-modified graft polymer prepared by the bulk, solution or bulk-suspension polymerization process,

the molding composition having a content of lithium that is greater than zero and lesser than or equal to 4 ppm.

Preferably, the thermoplastic molding compositions according to the invention comprise

A) 30 to 90 parts by wt., preferably 40 to 75 parts by wt., based on the total of A) and B), of aromatic polycarbonate and/or polyester carbonate and

B) 10 to 70 parts by wt., preferably 25 to 60 parts by wt., based on the total of A) and B), of a rubber-modified graft polymer prepared by the bulk, solution or bulk-suspension polymerization process, and lithium in an amount of 0.2 to 3.6 ppm, particularly preferably 0.3 to 3.2 ppm.

Component A

Aromatic polycarbonates and/or aromatic polyester carbonates according to component A which are suitable according to the invention are known from the literature or may be prepared by processes known from the literature (for the preparation of aromatic polycarbonates see, for example, Schnell, "Chemistry and Physics of Polycarbonates", Interscience Publishers, 1964 and DE-AS 1 495 626, DE-A 2 232 877, DE-A 2 703 376, DE-A 2 714 544, DE-A 3 000 610 and DE-A 3 832 396; for the preparation of aromatic polyester carbonates e.g. DE-A 3 077 934).

Aromatic polycarbonates are prepared e.g. by reaction of aromatic dihydroxy compounds, preferably diphenols, with carbonic acid halides, preferably phosgene, and/or with aromatic dicarboxylic acid dihalides, preferably benzenedicarboxylic acid dihalides, by the phase interface process, optionally using chain terminators, for example monophenols, and optionally using branching agents having functionalities of three of more, for example triphenols or tetraphenols. Preparation via a melt polymerization process by reaction of diphenols with, for example, diphenyl carbonate is likewise possible.

Diphenols for the preparation of the aromatic polycarbonates and/or aromatic polyester carbonates are preferably those of the formula (I)

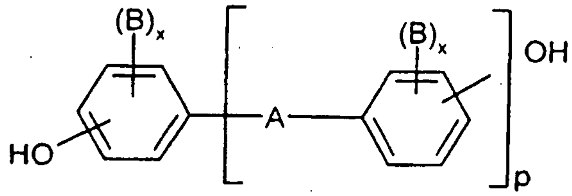

(I),

wherein

A is a single bond, $C_1$ to $C_5$-alkylene, $C_2$ to $C_5$-alkylidene, $C_5$ to $C_6$-cycloalkylidene, -O-, -SO-, -CO-, -S-, $-SO_2$, $C_6$ to $C_1$-arylene, on to which further aromatic rings optionally containing heteroatoms may be fused, or a radical of the formula (II) or (III)

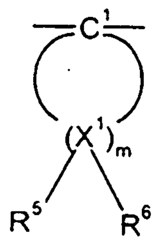

(II)

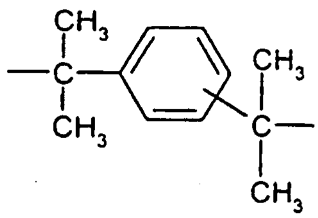

(III)

B in each case is $C_1$ to $C_{12}$-alkyl, preferably methyl, or halogen, preferably chlorine and/or bromine

x in each case independently of one another, is 0, 1 or 2,

p is 1 or 0, and

$R^5$ and $R^6$ independently for each $X^1$ and independently of one another denote hydrogen or $C_1$ to $C_6$-alkyl, preferably hydrogen, methyl or ethyl,

$X^1$ denotes carbon and

m denotes an integer from 4 to 7, preferably 4 or 5, with the proviso that on at least one atom $X^1$, $R^5$ and $R^6$ are simultaneously alkyl.

Preferred diphenols are hydroquinone, resorcinol, dihydroxydiphenols, bis-(hydroxyphenyl)-$C_1$-$C_5$-alkanes, bis-(hydroxyphenyl)-$C_5$-$C_6$-cycloalkanes, bis-(hydroxyphenyl) ethers, bis-(hydroxyphenyl) sulfoxides, bis-(hydroxyphenyl) ketones, bis-(hydroxyphenyl) sulfones and $\alpha,\alpha$-bis-(hydroxyphenyl)-diisopropylbenzenes, and derivatives thereof which are brominated on the nucleus and/or chlorinated on the nucleus.

Particularly preferred diphenols are 4,4'-dihydroxydiphenyl, bisphenol A, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl sulfone and di- and tetrabrominated or chlorinated derivatives thereof, such as, for example, 2,2-bis-(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane. 2,2-Bis-(4-hydroxyphenyl)-propane (bisphenol A) is particularly preferred.

The diphenols may be employed individually or as any desired mixtures. The diphenols are known from the literature or obtainable by known processes.

Chain terminators which are suitable for the preparation of the thermoplastic aromatic polycarbonates are, for example, phenol, p-chlorophenol, p-tert-butylphenol or 2,4,6-tribromophenol, and also long-chain alkylphenols, such as 4-[2-(2,4,4-trimethylpentyl)]-phenol according to DE-A 2 842 005, or monoalkylphenols or dialkylphenols having a total of 8 to 20 carbon atoms in the alkyl substituents, such as 3,5-di-tert-butylphenol, p-iso-octylphenol, p-tert-octylphenol, p-dodecylphenol and 2-(3,5-dimethylheptyl)-phenol and 4-(3,5-dimethylheptyl)-phenol. The amount of chain terminators to be employed is in general between 0.5 mol% and 10 mol%, based on the total moles of the aromatic dihydroxy compounds employed.

The thermoplastic aromatic polycarbonates have weight-average molecular weights ($M_w$, measured e.g. by ultracentrifuge or scattered light measurement) of 10,000 to 200,000 g/mol, preferably 15,000 to 80,000 g/mol, particularly preferably 24,000 to 32,000 g/mol.

The thermoplastic aromatic polycarbonates may be branched in a known manner, and in particular preferably by incorporation of 0.05 to 2.0 mol% , based on the total of the aromatic dihydroxy compounds employed, of compounds having functionalities of three or more , for example those having three and more phenolic groups.

Both homopolycarbonates and copolycarbonates are suitable. For the preparation of copolycarbonates according to the invention according to component A, it is also possible to employ 1 to 25 wt.%, preferably 2.5 to 25 wt. %, based on the total amount of aromatic dihydroxy compounds to be employed, of polydiorganosiloxanes having hydroxyaryloxy end groups. These are known (US 3 419 634) and may be prepared by processes known from the literature. The preparation of polydiorganosiloxane-containing copolycarbonates is described in DE-A 3 334 782.

Preferred polycarbonates, in addition to the bisphenol A homopolycarbonates, are the copolycarbonates of bisphenol A with up to 15 mol%, based on the total moles of aromatic dihydroxy compounds, of other aromatic dihydroxy compounds mentioned as preferred or particularly preferred, in particular 2,2-bis-(3,5-dibromo-4-hydroxyphenyl)-propane.

Aromatic dicarboxylic acid dihalides for the preparation of aromatic polyester carbonates are, preferably, the diacid dichlorides of isophthalic acid, terephthalic acid, diphenyl ether-4,4'-dicarboxylic acid and naphthalene-2,6-dicarboxylic acid.

Mixtures of the diacid dichlorides of isophthalic acid and terephthalic acid in a ratio of between 1:20 and 20:1 are particularly preferred.

A carbonic acid halide, preferably phosgene, is additionally co-used as a bifunctional acid derivative in the preparation of polyester carbonates.

Suitable chain terminators for the preparation of the aromatic polyester carbonates are, in addition to the monophenols already mentioned, also chlorocarbonic acid esters thereof and the acid chlorides of aromatic monocarboxylic acids, which may optionally be substituted by $C_1$ to $C_{22}$-akyl groups or by halogen atoms, as well as aliphatic $C_2$ to $C_{22}$-monocarboxylic acid chlorides.

The amount of chain terminators is in each case 0.1 to 10 mol%, based on the moles of aromatic dihydroxy compounds in the case of the phenolic chain terminators and on the moles of dicarboxylic acid dichloride in the case of monocarboxylic acid chloride chain terminators.

The aromatic polyester carbonates may also contain incorporated aromatic hydroxycarboxylic acids.

The aromatic polyester carbonates may be either linear or branched in a known manner (in this context, see DE-A 2 940 024 and DE-A 3 007 934).

Branching agents which may be used are, for example, carboxylic acid chlorides having functionalities of three or more , such as trimesic acid trichloride, cyanuric acid trichloride, 3,3',4,4'-benzophenone-tetracarboxylic acid tetrachloride, 1,4,5,8-naphthalenetetracarboxylic acid tetrachloride or pyromellitic acid tetrachloride, in amounts of 0.01 to

1.0 mol% (based on the dicarboxylic acid dichlorides employed), or phenols having functionalities of three or more , such as phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-[4,4-bis-(4-hydroxyphenyl)-cyclohexyl]-propane, 2,4-bis-(4-hydroxyphenyl-isopropyl)-phenol, tetra-(4-hydroxyphenyl)-methane, 2,6-bis-(2-hydroxy-5-methyl-benzyl)-4-methyl-phenol, 2-(4-hydroxyphenyl)-2-(2,4-dihydroxyphenyl)-propane, tetra-(4-[4-hydroxyphenyl-isopropyl)-phenoxy)-methane, or 1,4-bis-[4,4'-dihydroxytriphenyl)-methyl]-benzene, in amounts of 0.01 to 1.0 mol%, based on the aromatic dihydroxy compounds employed. Phenolic branching agents may be initially introduced into the reaction mixture with the aromatic dihydroxy compounds, and acid chloride branching agents may be introduced together with the acid dichlorides.

The content of carbonate structural units in the thermoplastic aromatic polyester carbonates may be varied as desired. Preferably, the content of carbonate groups is a positive amount up to 100 mol%, in particular up to 80 mol%, particularly preferably up to 50 mol%, based on the total of ester groups and carbonate groups. Both the ester and the carbonate content of the aromatic polyester carbonates may be present in the polycondensate in the form of blocks or in random distribution.

The relative solution viscosity ($\eta_{rel}$) of the aromatic polycarbonates and polyester carbonates is in the range of 1.18 to 1.4, preferably 1.20 to 1.32 (measured on solutions of 0.5 g polycarbonate or polyester carbonate in 100 ml methylene chloride solution at 25 °C).

The thermoplastic aromatic polycarbonates and polyester carbonates may be employed by themselves or in any desired mixture.

Component B

The rubber-modified graft polymer B comprises a random copolymer of

B.1 50 to 97 wt.%, preferably 65 to 95 wt.%, particularly preferably 80 to 90 wt.%, based on B), of one or more vinyl monomers on

B.2 3 to 50 wt.%, preferably 5 to 35 wt.%, particularly preferably 10 to 20 wt.%, based on B), of one or more graft bases having a glass transition temperature of <10 °C, preferably <-10 °C, particularly preferably <-30 °C, in particular <-50 °C

the preparation of B) being carried out in a known manner by a bulk or solution or bulk-suspension polymerization process, as described e.g. in US-3 243 481, US-3 509 237, US-3 660 535, US-4 221 833 and US-4 239 863 (incorporated herein by reference).

Monomers B.1 are preferably mixtures of

B.1.1 50 to 99 wt.%, preferably 65 to 85 wt.%, based on B.1, of at least one monomer selected from the group consisting of vinylaromatics and vinylaromatics substituted on the nucleus (such as, for example, styrene, α-methylstyrene, p-methylstyrene or p-chlorostyrene) and

B.1.2 1 to 50 wt.%, preferably 15 to 35 wt.%, based on B.1, of at least one monomer selected from the group consisting of vinyl cyanides (unsaturated nitriles, such as acrylonitrile and methacrylonitrile), (meth)acrylic acid ($C_1$-$C_8$)-alkyl esters (such as methyl methacrylate, n-butyl acrylate and tert-butyl acrylate) and derivatives of unsaturated carboxylic acids (such as anhydrides and imides, for example maleic anhydride and N-phenyl-maleimide).

Preferred monomer B.1.1 is selected from the group consisting of styrene and α-methylstyrene, and preferred monomer B.1.2 is selected from the group consisting of acrylonitrile, butyl acrylate, tert-butyl acrylate, maleic anhydride and methyl methacrylate.

Particularly preferred B.1.1 is styrene and the preferred B.1.2 is acrylonitrile. In an alternative embodiment, styrene is employed as monomer B.1.1) and a mixture of at least 70 wt.%, in particular greater than 80 wt.%, particularly preferably greater than 85 wt.%, based on B.1.2), of acrylonitrile and a maximum of 30 wt.%, in particular max. 20 wt. %, particularly preferably max. 15 wt.%, based on B.1.2), of a further monomer selected from the group consisting of butyl acrylate, tert-butyl acrylate, maleic anhydride and methyl methacrylate may be employed as monomer B.1.2).

Rubbers B.2 which are suitable for the rubber-modified graft polymers B are, for example, diene rubbers, styrene/butadiene (SBR) rubbers, EP(D)M rubbers, that is to say those based on ethylene/propylene and optionally diene, and acrylate, polyurethane, silicone, chloroprene and ethylene/vinyl acetate rubbers and mixtures of the abovementioned rubber types.

Preferred rubbers B.2 are diene rubbers (e.g. based on butadiene, isoprene etc.) or mixtures of diene rubbers

or copolymers of diene rubbers or mixtures thereof with further copolymerizable monomers (e.g. according to B.1.1 and B.1.2), with the proviso that the glass transition temperature of component B.2 is below 10 °C, preferably below -10°C.

Preferably, the graft base B.2 is a linear or branched diene rubber. Particularly preferably, the graft base B.2) is a linear or branched polybutadiene rubber, a polybutadiene/styrene rubber or a mixture thereof.

If necessary and if the rubber properties of component B.2 are not thereby impaired, component B may additionally also comprise small amounts, typically less than 5 wt.%, preferably less than 2 wt.%, based on B.2, of ethylenically unsaturated crosslinking monomers. Examples of such monomers include alkylene diol di-(meth)-acrylates, polyester di-(meth)-acrylates, divinylbenzene, trivinylbenzene, triallyl cyanurate, allyl (meth)-acrylate, diallyl maleate and diallyl fumarate.

The rubber-modified graft polymer B may be obtained by grafting polymerization of B.1 on to B.2, the grafting polymerization being carried out by a bulk or solution or bulk-suspension polymerization process.

In the preparation of the rubber-modified graft polymers B, it is essential that the rubber component B.2 is present in dissolved form in the mixture of monomers B.1.1 and/or B.1.2 before the grafting polymerization. A further organic solvent may optionally also be added for this purpose, such as, for example, methyl ethyl ketone, toluene or ethylbenzene or a mixture of conventional organic solvents. The rubber component B.2 may thus be neither so highly crosslinked that a solution in B.1.1. and/or B.1.2, optionally in the presence of further solvents, becomes impossible, nor may B.2 already be in the form of discrete particles at the start of the grafting polymerization. The particle morphology and increasing crosslinking of B.2, which are important for the product properties of B, develop only in the course of the grafting polymerization (in this context see, for example, Ullmann, Encyclopädie der technischen Chemie, volume 19, p. 284 et seq., 4th edition 1980 incorporated herein by reference). Further additives, such as polymerization initiators, stabilizers, regulators, crosslinking agents and additives which inhibit post-crosslinking, in particular also oils (for example silicone oils, synthetic machine oils or plant oils) may be added to the reaction mixture in the grafting polymerization reaction.

The copolymer of B.1.1 and B.1.2 is conventionally present in the polymer B in part in a form grafted on to or into the rubber B.2, this graft copolymer forming discrete particles in the polymer B. The content of the grafted-on or -in copolymer of B.1.1 and B.1.2 in the total copolymer of B.1.1 and B.1.2 - that is to say the grafting yield (= weight ratio of the graft monomers actually grafted to the total graft monomers used x 100, stated in %) - is preferably 2 to 40 % more preferably 3 to 30 %, particularly preferably 4 to 20 %.

The average particle diameter of the resulting grafted rubber particles (determined by counting on electron microscopy photographs) is in the range from 0.3 to 5 $\mu$m, preferably 0.4 to 2.5 $\mu$m, in particular 0.5 to 1.5 $\mu$m.

Preferably, the rubber-modified graft polymer B has a content of lithium of more than zero and less than or equal to 10 ppm, particularly preferably 0.5 ppm to 9 ppm, preferably 0.8 ppm to 8 ppm.

The composition may comprise further additives. For example, polymeric constituents and functional additives may be added to the composition.

In particular, (co)polymers of at least one monomer selected from the group consisting of vinylaromatics, vinyl cyanides (unsaturated nitriles), (meth)acrylic acid ($C_1$ to $C_8$)-alkyl esters, unsaturated carboxylic acids and derivatives (such as anhydrides and imides) of unsaturated carboxylic acids may be added as component C.

Copolymers C) which are suitable in particular are resinous, thermoplastic and rubber-free and are of

C.1 50 to 99 wt.%, preferably 65 to 90 wt.%, based on the (co)polymer C), of at least one monomer chosen from the group consisting of vinylaromatics (such as, for example, styrene and $\alpha$-methylstyrene), vinylaromatics substituted on the nucleus (such as, for example p-methylstyrene or p-chlorostyrene) and (meth)acrylic acid ($C_1$-$C_8$)-alkyl esters (such as, for example, methyl methacrylate, n-butyl acrylate and tert-butyl acrylate) and

C.2 1 to 50 wt.%, preferably 10 to 35 wt.%, based on the (co)polymer C), of at least one monomer chosen from the group consisting of vinyl cyanides (such as, for example, unsaturated nitriles, such as acrylonitrile and methacrylonitrile), (meth)acrylic acid ($C_1$-$C_8$)-alkyl esters (such as, for example, methyl methacrylate, n-butyl acrylate and tert-butyl acrylate), unsaturated carboxylic acids and derivatives of unsaturated carboxylic acids (for example maleic anhydride and N-phenyl-maleimide).

The copolymer of C.1 styrene and C.2 acrylonitrile is particularly preferred.

Also suitable as component C) is a homopolymer of (meth)acrylic acid ($C_1$-$C_8$)-alkyl ester (such as methyl methacrylate, n-butyl acrylate and tert-butyt acrylate) .

Such (co)polymers C) are known and may be prepared by free-radical polymerization, in particular by emulsion, suspension, solution or bulk polymerization. The (co)polymers C) preferably have molecular weights $M_w$ (weight-average, determined by light scattering or sedimentation) of between 15,000 and 200,000.

Rubber-modified copolymers prepared by the emulsion polymerization process (component D) may also be employed as further polymeric additives. These commercially available graft polymers, which are as a rule supplied as impact modifiers, are preferably acrylonitrile/styrene/butadiene (ABS) and/or methyl methacrylate/styrene/butadiene

(MBS). However, graft polymers D) which are likewise preferably suitable are those of

D.1 5 to 95 wt.%, based on component D), of a grafted shell of

D.1.1 50 to 99 wt.%, preferably 65 to 90 wt.%, based on the grafted shell D.1, of at least one monomer chosen from the group consisting of vinylaromatics (such as, for example, styrene and $\alpha$-methylstyrene), vinylaromatics substituted on the nucleus (such as, for example p-methylstyrene or p-chlorostyrene) and (meth)acrylic acid ($C_1$-$C_8$)-alkyl esters (such as, for example, methyl methacrylate, n-butyl acrylate and tert-butyl acrylate) and

D.1.2 1 to 50 wt.%, preferably 10 to 35 wt.%, based on the grafted shell, of at least one monomer chosen from the group consisting of vinyl cyanides (such as, for example, unsaturated nitriles, such as acrylonitrile and methacrylonitrile), (meth)acrylic acid ($C_1$-$C_8$)-alkyl esters (such as, for example, methyl methacrylate, n-butyl acrylate and tert-butyl acrylate), unsaturated carboxylic acids and derivatives of unsaturated carboxylic acids (for example maleic anhydride and N-phenyl-maleimide).

on

D.2 a graft base chosen from the group consisting of diene rubbers, silicone rubbers, acrylate rubbers and silicone/acrylate composite rubbers.

The composition may moreover comprise further conventional polymer additives (component E), such as flameproofing agents, anti dripping agents (for example fluorinated polyolefins, silicones and aramid fibres), lubricants and mold release agents, for example pentaerythritol tetrastearate, nucleating agents, antistatics, stabilizers, fillers and reinforcing substances (for example glass or carbon fibres, mica, kaolin, talc, $CaCO_3$ and glass flakes) as well as dyestuffs and pigments.

The molding compositions according to the invention show, after storage at 95°C and 100 % relative humidity for seven days, an increase in the melt volume flow rate (MVR, measured at 260°C with a 5 kg piston load) of not more than 70 %, preferably not more than 50 %, in particular not more than 30 %. The increase in the MVR is a measure of the hydrolytic degradation of the polycarbonate molecular weight. Optional components C, D and E are selected such that their inclusion in the composition does not adversely effect the hydrolytic properties of the polycarbonate . Preferably C, D and/or E are as Brönstedt-neutral as possible It is essential that the content of alkali metal and alkaline earth metal ions of components C, D and E is a low as possible, in particular in a range from 0.1 ppm to 1,500 ppm, and particularly preferably does not exceed 500 ppm.

Preparation of the molding compositions and molded articles

The thermoplastic molding compositions according to the invention are prepared by mixing the particular constituents in a known manner and subjecting the mixture to melt compounding and melt extrusion at temperatures of 200 °C to 300 °C in conventional units, such as internal kneaders, extruders and twin-screw extruders.

The mixing of the individual constituents may take place in a known manner, either successively or simultaneously, and in particular either at about 20 °C (room temperature) or at a higher temperature.

The molding compositions according to the invention may be used for the production of all types of shaped articles. These may be produced by injection molding, extrusion and blow molding processes. A further form of processing is the production of shaped articles by thermoforming from previously produced sheets or films.

Examples of such shaped articles are films, profiles, all types of housing components, e.g. for domestic appliances, such as juice presses, coffee machines and mixers; for office machines, such as monitors, flatscreens, notebooks, printers and copiers; sheets, pipes, electrical installation conduits, windows, doors and further profiles for the building sector (interior finishing and exterior uses) as well as electrical and electronic components, such as switches, plugs and plug sockets and components for commercial vehicles, in particular for the automobile sector.

In particular, the molding compositions according to the invention may also be used, for example, for the production of the following shaped articles or moldings: interior finishing components for rail vehicles, ships, aircraft, buses and other motor vehicles, housings for electrical equipment containing small transformers, housings for equipment of processing and transmitting information, housings and coverings for medical equipment, massage equipment and housings therefor, toy vehicles for children, flat wall elements, housings for safety devices, thermally insulated transportation containers, moldings for sanitary and bath fittings, covering gratings for ventilation openings and housings for garden equipment.

## EXAMPLES

Component A

Linear polycarbonate based on bisphenol A having a weight-average molecular weight $\overline{M}_w$ of 26 kg/mol (determined by GPC).

Components B-1 to B-7

ABS polymers prepared by bulk polymerization of 82 wt.%, based on the ABS polymer, of a mixture of 23 wt.% acrylonitrile, 74 wt.% styrene and 3 wt.% butyl acrylate in the presence of 18 wt.%, based on the ABS polymer, of rubbers B-1 to B-7 dissolved in methyl ethyl ketone.

The rubbers employed as components B-1 to B-7 are described in the following Table 1.

Table 1: Graft polymers and pre-compounds

| Designation | Rubber component | Trade name, manufacturer | Content in [ppm] | | | | |
|---|---|---|---|---|---|---|---|
| | | | Li | Na | K | Mg | Ca |
| B-1 | linear polybutadiene rubber | Taktene 380, Lanxess (Germany) | 1.2 | 1.5 | 1.9 | <1 | 6.3 |
| B-2 | linear SBR[1)] with 22 % styrene content | Nippon Zeon NS310S, Nippon Zeon (Japan) | 2 | <1 | <1 | <1 | <1 |
| B-3 | branched polybutadiene rubber | Buna CB565T, Lanxess (Germany) | 3 | <1 | <1 | <1 | <1 |
| B-4 | linear SBR with 40 % styrene content | Buna BL6533, Lanxess (Germany) | 5 | <1 | <1 | <1 | <1 |
| B-5 | branched polybutadiene rubber | Asaprene 720AX, Asahi Kasei (Japan) | 7 | < 1 | <1 | 5 | 4 |
| B-6 | linear SBR with 10 % styrene content | Buna BL8497, Lanxess (Germany) | 11 | <1 | <1 | <1 | 6 |
| B-7 | branched polybutadiene rubber | Asaprene 730AX, Asahi Kasei (Japan) | 16 | <1 | <1 | 2 | 2 |
| 1) SBR = styrene/butadiene rubber | | | | | | | |

Preparation and testing of the molding compositions according to the invention

Components A and B are mixed on a 1.3 1 internal kneader.

To evaluate the resistance to hydrolysis of the exemplified PC/ABS compositions , the melt volume flow rates (MVR) were determined in accordance with ISO1133 at 260 °C with a 5 kg piston load on samples immediately after the compounding and after hydrolytic ageing at 95 °C and 100 % relative humidity for 7 days. The resulting change in the MVR is a measure of the resistance of the composition to hydrolysis, and is calculated as follows:

$$MVR\ change = \frac{MVR\ (after\ storage) - MVR\ (before\ storage)}{MVR\ (before\ storage)} * 100\,\%.$$

It may be seen from the data in Table 2 that the resistance of the exemplified PC/ABS compositions to hydrolysis surprisingly depends very greatly on the lithium content of the ABS, but not - at least not to a comparable extent - on the content of other alkali metal or alkaline earth metal ions, such as $Na^+$, $K^+$, $Ca^{2+}$ and $Mg^{2+}$.

A good resistance to hydrolysis (defined here as the MVR change according to the above definition of < 70 %) results in these compositions comprising polycarbonate and a rubber-modified component (ABS graft polymer, prepared by the bulk polymerization process) if the rubber-modified component has an Li content of not more than 10 ppm.

Table 2: Molding compositions and their properties

| Components [parts by wt.] | 1 | 2 | 3 | 4 | 5 | V1 | V2 |
|---|---|---|---|---|---|---|---|
| A | 60 | 60 | 60 | 60 | 60 | 60 | 60 |
| B-1 | 40 | | | | | | |
| B-2 | | 40 | | | | | |
| B-3 | | | 40 | | | | |
| B-4 | | | | 40 | | | |
| B-5 | | | | | 40 | | |
| B-6 | | | | | | 40 | |
| B-7 | | | | | | | 40 |
| Li content of the composition [ppm] | 0.5 | 0.8 | 1.2 | 2.0 | 2.8 | 4.4 | 6.4 |
| Properties | | | | | | | |
| MVR (before hydrolysis) [ml/10min] | 19 | 6 | 15 | 12 | 20 | 12 | 19 |
| MVR (after hydrolysis) [ml/10min] | 19 | 6 | 16 | 14 | 23 | 22 | 56 |
| MVR change [%] | 0 | 0 | 7 | 17 | 15 | 83 | 195 |

Although the invention has been described in detail in the foregoing for the purpose of illustration, it is to be understood that such detail is solely for that purpose and that variations may be made therein by those skilled in the art without departing from the spirit and scope of the invention except as it may be limited by the claims.

## Claims

**1.** A thermoplastic molding composition comprising

A) aromatic polycarbonate and/or polyester carbonate and
B) a rubber-modified graft polymer prepared by the bulk, solution or bulk-suspension polymerization process,

the molding composition having a positive content of lithium ions of less than or equal to 4 ppm.

**2.** The composition according to Claim 1 wherein

A) is present at an amount of 30 to 90 parts and
B) is present at an amount of 10 to 70 parts said parts, both occurrences, relative to the total weight of A) and B).

**3.** The composition of Claim 1 wherein said B) comprises

B.1) 50 to 97 wt.%, based on B), of the polymerization product of at least one vinyl monomer grafted on

B.2) 3 to 50 wt.%, based on B), of one or more graft bases having a glass transition temperature of <10°C.

**4.** The composition of Claim 1 wherein the content of lithium is 0.2 ppm to 3.6 ppm.

**5.** The composition according to Claim 1 wherein the content of lithium is 0.3 ppm to 3.2 ppm.

**6.** The composition according to Claim 1 wherein said

A) is present at an amount of 40 to 75 parts and said
B) is present at an amount of 25 to 60 parts, the parts , both occurrences, being relative to the total weight of A) and B).

**7.** The composition according to Claim 1 wherein the aromatic polycarbonate has a weight-average molecular weight of 24,000 to 32,000 g/mol.

**8.** The composition according to Claim 1 wherein the rubber-modified graft polymer comprise

B.1 65 to 95 wt.%, based on B), of the polymerized product of a mixture of

B.1.1 50 to 99 wt.%, based on B.1), of at least one member selected from the group consisting of vinylaromatics and vinylaromatics substituted on the nucleus and
B.1.2 to 50 wt.%, based on B.1), of at least one member selected from the group consisting of vinyl cyanides, (meth)acrylic acid ($C_1$-$C_8$)-alkyl esters and derivatives of unsaturated carboxylic acids

grafted on
B.2 5 to 35 wt.%, based on B), of one or more graft bases having a glass transition temperature of <-10 °C.

**9.** The composition according to Claim 8, wherein B.1.1) is styrene and B.1.2) is acrylonitrile.

**10.** The composition according to Claim 8, wherein B.1.1) is styrene and B.1.2) is a mixture of at least 70 wt.%, based on B.1.2), of acrylonitrile and not more than 30 wt.%, based on B.1.2) of at least one member selected from the group consisting of butyl acrylate, *tert*-butyl acrylate, maleic anhydride and methyl methacrylate.

**11.** The composition according to Claim 8, wherein B.2) is diene rubber.

**12.** The composition according to Claim 11, wherein B.2) is at least one member selected from the group consisting of polybutadiene rubber, and polybutadiene/styrene rubber.

**13.** The composition according to Claim 1 wherein the rubber-modified graft polymer has a content of lithium of 0.8 ppm to 8 ppm.

**14.** The composition according to Claim 1 further comprising a (co)polymer of

C.1 50 to 99 wt.%, based on the (co)polymer, of at least one monomer selected from the group consisting of vinylaromatics, vinylaromatics substituted on the nucleus and (meth)acrylic acid ($C_1$-$C_8$)-alkyl esters and
C.2 1 to 50 wt.%, based on the copolymer, of at least one monomer selected from the group consisting of vinyl cyanides, (meth)acrylic acid ($C_1$-$C_8$)-alkyl esters, unsaturated carboxylic acids and derivatives of unsaturated carboxylic acids.

**15.** The composition according to Claim 1 further comprising a graft polymer D prepared by emulsion polymerization.

**16.** The composition according to Claim 15, wherein D) comprises

D.1 5 to 95 wt.%, based on D), of a copolymerized grafted shell of

D.1.1 50 to 99 wt.%, based on the grafted shell D.1, of at least one member selected from the group consisting of vinylaromatics, vinylaromatics substituted on the nucleus and (meth)acrylic acid ($C_1$-$C_8$)-alkyl esters and

D.1.2 1 to 50 wt.%, based on the grafted shell, of at least one member selected from the group consisting of vinyl cyanides, (meth)acrylic acid ($C_1$-$C_8$)-alkyl esters, unsaturated carboxylic acids and derivatives of unsaturated carboxylic acids

grafted on
D.2 a graft base selected from the group consisting of diene rubbers, silicone rubbers, acrylate rubbers and silicone/acrylate composite rubbers.

**17.** The composition according to Claim 16, wherein D.1.1 is styrene, D.1.2 is acrylonitrile or methyl methacrylate and D.2 is butadiene rubber.

**18.** The composition according to Claim 1 further comprising at least one member selected from the group consisting of flameproofing agents, antidripping agents, lubricants mold release agents, nucleating agents, antistatics, stabilizers, fillers, reinforcing agents , dyestuffs and pigments.

**19.** A molded article comprising the composition of Claim 1.

**Patentansprüche**

**1.** Thermoplastische Formmasse, umfassend

A) aromatisches Polycarbonat und/oder Polyestercarbonat und
B) ein Kautschuk-modifiziertes Pfropfpolymer, hergestellt durch das Masse-, Lösungs- oder Masse-Suspensionspolymerisationsverfahren,

worin die Formmasse einen positiven Gehalt an Lithiumionen von weniger als oder gleich 4 ppm aufweist.

**2.** Masse gemäß Anspruch 1, worin

A) in einer Menge von 30 bis 90 Teilen und
B) in einer Menge von 10 bis 70 Teilen vorhanden sind, wobei die genannten Teile jeweils beide auf das Gesamtgewicht von A) und B) bezogen sind.

**3.** Masse gemäß Anspruch 1, worin das genannte B) umfasst

B.1) 50 bis 97 Gew.-%, bezogen auf B), des Polymerisationsproduktes mindestens eines Vinylmonomer, gepfropft auf
B.2) 3 bis 50 Gew.-%, bezogen auf B), einer oder mehrerer Pfropfgrundlagen mit einer Glasübergangstemperatur von <10°C.

**4.** Masse gemäß Anspruch 1, worin der Gehalt an Lithium 0,2 ppm bis 3,6 ppm beträgt.

**5.** Masse gemäß Anspruch 1, worin der Gehalt an Lithium 0,3 ppm bis 3,2 ppm beträgt.

**6.** Masse gemäß Anspruch 1, worin das genannte

A) in einer Menge von 40 bis 75 Teilen und das genannte
B) in einer Menge von 25 bis 60 Teilen vorhanden sind, wobei die Teile jeweils beide auf das Gesamtgewicht von A) und B) bezogen sind.

**7.** Masse gemäß Anspruch 1, worin das aromatische Polycarbonat ein gewichtsdurchschnittliches Molekulargewicht von 24.000 bis 32.000 g/mol aufweist.

**8.** Masse gemäß Anspruch 1, worin das Kautschuk-modifizierte Pfropfpolymer umfasst

B.1) 65 bis 95 Gew.-%, bezogen auf B), des polymerisierten Produkts einer Mischung aus

B.1.1) 50 bis 99 Gew.-%, bezogen auf B.1), mindestens eines Mitglieds, ausgewählt aus der Gruppe, bestehend aus Vinylaromaten und am Kern substituierten Vinylaromaten, und
B.1.2) 1 bis 50 Gew.-%, bezogen auf B.1), mindestens eines Mitglieds, ausgewählt aus der Gruppe, bestehend aus Vinylcyaniden, (Meth)acrylsäure($C_1$-$C_8$)-alkylestern und Derivaten ungesättigter Carbonsäuren,

gepfropft auf
B.2) 5 bis 35 Gew.-%, bezogen auf B), mindestens einer oder mehrerer Pfropfgrundlagen mit einer Glasübergangstemperatur von <-10°C.

**9.** Masse gemäß Anspruch 8, worin B.1.1) Styrol und B.1.2) Acrylnitril sind.

**10.** Masse gemäß Anspruch 8, worin B.1.1) Styrol und B.1.2) eine Mischung aus mindestens 70 Gew.-%, bezogen auf B.1.2), Acrylnitril und nicht mehr als 30 Gew.-%, bezogen auf B.1.2), mindestens eines Mitglieds, ausgewählt aus der Gruppe, bestehend aus Butylacrylat, t-Butylacrylat, Maleinsäureanhydrid und Methylmethacrylat.

**11.** Masse gemäß Anspruch 8, worin B.2) Dienkautschuk ist.

**12.** Masse gemäß Anspruch 11, worin B.2) mindestens ein Mitglied ist, ausgewählt aus der Gruppe, bestehend aus Polybutadienkautschuk und Polybutadien/Styrolkautschuk.

**13.** Masse gemäß Anspruch 1, worin das Kautschuk-modifizierte Pfropfpolymer einen Gehalt an Lithium von 0,8 ppm bis 8 ppm aufweist.

**14.** Masse gemäß Anspruch 1, ferner umfassend ein (Co)polymer aus

C.1) 50 bis 99 Gew.-%, bezogen auf das (Co)polymer, mindestens eines Monomer, ausgewählt aus der Gruppe, bestehend aus Vinylaromaten, am Kern substituierten Vinylaromaten und (Meth)acrylsäure($C_1$-$C_8$)alkylestern und
C.2) 1 bis 50 Gew.-%, bezogen auf das (Co)polymer, mindestens eines Monomer, ausgewählt aus der Gruppe, bestehend aus Vinylcyaniden, (Meth)acrylsäure-($C_1$-$C_8$)alkylestern, ungesättigten Carbonsäuren und Derivaten ungesättigter Carbonsäuren.

**15.** Masse gemäß Anspruch 1, ferner umfassend ein durch Emulsionspolymerisation hergestelltes Pfropfpolymer D).

**16.** Masse gemäß Anspruch 15, worin D) umfasst

D.1) 5 bis 95 Gew.-%, bezogen auf D), einer copolymerisierten gepfropften Schale aus

D.1.1) 50 bis 99 Gew.-%, bezogen auf die gepfropfte Schale D.1), mindestens eines Mitglieds, ausgewählt aus der Gruppe, bestehend aus Vinylaromaten, am Kern substituierten Vinylaromaten und (Meth)acrylsäure ($C_1$-$C_8$)alkylestern, und
D.1.2) 1 bis 50 Gew.-%, bezogen auf die gepfropfte Schale, mindestens eines Mitglieds, ausgewählt aus der Gruppe, bestehend aus Vinylcyaniden, (Meth)acrylsäure($C_1$-$C_8$)-alkylestern, ungesättigten Carbonsäuren und Derivaten ungesättigter Carbonsäuren,

gepfropft auf
D.2) eine Pfropfgrundlage, ausgewählt aus der Gruppe, bestehend aus Dienkautschuken, Siliconkautschuken, Acrylatkautschuken und Silicon/Acrylat-Kompositkautschuken.

**17.** Masse gemäß Anspruch 16, worin D.1.1) Styrol, D.1.2.) Acrylnitril oder Methylmethacrylat und D.2) Butadienkautschuk sind.

**18.** Masse gemäß Anspruch 1, ferner umfassend mindestens ein Mitglied, ausgewählt aus der Gruppe, bestehend aus flammhemmenden Mitteln, Antitropfmitteln, Schmier-Formfreisetzmitteln, Nukleierungsmitteln, Antistatika, Stabilisierern, Füllstoffen, Verstärkungsmitteln, Farbstoffen und aus Pigmenten.

**19.** Formartikel, umfassend die Masse gemäß Anspruch 1.

## Revendications

1. Composition de moulage thermoplastique comprenant

   A) un polycarbonate aromatique et/ou un polyester carbonate et
   B) un polymère greffé caoutchouc-modifié préparé par le procédé de polymérisation en masse, en solution ou en masse-suspension,

   la composition de moulage présentant une teneur positive en ions lithium inférieure ou égale à 4 ppm.

2. Composition selon la revendication 1, dans laquelle

   A) est présent dans une quantité de 30 à 90 parties et
   B) est présent dans une quantité de 10 à 70 parties desdites parties, dans les deux cas, par rapport au poids total de A) et de B).

3. Composition selon la revendication 1, dans laquelle ledit B) comprend

   B.1) de 50 à 97 % en poids, rapporté à B), du produit de polymérisation d'au moins un monomère vinylique greffé sur
   B.2) de 3 à 50 % en poids, rapporté à B), d'une ou plusieurs bases de greffage présentant une température de transition vitreuse < 10°C.

4. Composition selon la revendication 1, dans laquelle la teneur en lithium est de 0,2 ppm à 3,6 ppm.

5. Composition selon la revendication 1, dans laquelle la teneur en lithium est de 0,3 ppm à 3,2 ppm.

6. Composition selon la revendication 1, dans laquelle ledit

   A) est présent dans une quantité de 40 à 75 parties et ledit
   B) est présent dans une quantité de 25 à 60 parties, les parties, dans les deux cas, étant relatives au poids total de A) et de B).

7. Composition selon la revendication 1, dans laquelle le polycarbonate aromatique présente un poids moléculaire moyen en poids de 24 000 à 32 000 g/mol.

8. Composition selon la revendication 1, dans laquelle le polymère greffé caoutchouc-modifié comprend

   B.1 de 65 à 95 % en poids, rapporté à B), du produit polymérisé d'un mélange de

      B.1.1 de 50 à 99 % en poids, rapporté à B.1), d'au moins un élément choisi parmi des aromatiques vinyliques et des aromatiques vinyliques substitués sur le noyau, et
      B.1.2 de 1 à 50 % en poids, rapporté à B.1), d'au moins un élément choisi parmi des cyanures de vinyle, des esters alkyliques en $C_1$-$C_8$ d'acide (méth)acrylique et des dérivés d'acides carboxyliques insaturés,

   greffés sur
   B.2 de 5 à 35 % en poids, rapporté à B), d'une ou plusieurs bases de greffage présentant une température de transition vitreuse < -10°C.

9. Composition selon la revendication 8, dans laquelle B.1.1) est le styrène et B.1.2) est l'acrylonitrile.

10. Composition selon la revendication 8, dans laquelle B.1.1) est le styrène et B.1.2) est un mélange d'au moins 70 % en poids, rapporté à B.1.2), d'acrylonitrile et d'au plus 30 % en poids, rapporté à B.1.2), d'au moins un élément choisi parmi l'acrylate de butyle, l'acrylate de *tert*-butyle, l'anhydride maléique et le méthacrylate de méthyle.

11. Composition selon la revendication 8, dans laquelle B.2) est un caoutchouc de diène.

12. Composition selon la revendication 11, dans laquelle B.2) est au moins un élément choisi parmi un caoutchouc de

polybutadiène et un caoutchouc de polybutadiène/styrène.

**13.** Composition selon la revendication 1, dans laquelle le polymère greffé caoutchouc-modifié présente une teneur en lithium de 0,8 ppm à 8 ppm.

**14.** Composition selon la revendication 1 comprenant de plus un (co)polymère de

C.1 de 50 à 99 % en poids, rapporté au (co)polymère, d'au moins un monomère choisi, parmi aromatiques vinyliques, des aromatiques vinyliques substitués sur le noyau et des esters alkyliques en $C_1$-$C_8$ d'acide (méth) acrylique et
C.2 de 1 à 50 % en poids, rapporté au copolymère, d'au moins un monomère choisi parmi des cyanures de vinyle, des esters alkyliques en $C_1$-$C_8$ d'acide (méth)acrylique, des acides carboxyliques insaturés et des dérivés d'acides carboxyliques insaturés.

**15.** Composition selon la revendication 1 comprenant de plus un polymère greffé D préparé par polymérisation en émulsion.

**16.** Composition selon la revendication 15, dans laquelle D) comprend

D.1 de 5 à 95 % en poids, rapporté à D) d'un revêtement greffé polymérisé de

D.1.1 de 50 à 99 % en poids, rapporté au revêtement greffé D.1, d'au moins un élément choisi parmi des aromatiques vinyliques, des aromatiques vinyliques substitués sur le noyau et des esters alkyliques en $C_1$-$C_8$ d'acide (méth)acrylique et
D.1.2 de 1 à 50 % en poids, rapporté au revêtement greffé, d'au moins un élément choisi parmi des cyanures de vinyle, des esters alkyliques en $C_1$-$C_8$ d'acide (méth)acrylique, des acides carboxyliques insaturés et des dérivés d'acides carboniques insaturés

greffés sur
D.2 une base de greffage choisie parmi des caoutchoucs de diène, des caoutchoucs de silicone, des caoutchoucs d'acrylate et des caoutchoucs composites de silicone/acrylate.

**17.** Composition selon la revendication 16, dans laquelle D.1.1 est le styrène, D.1.2 est l'acrylonitrile ou le méthacrylate de méthyle et D.2 est un caoutchouc de butadiène.

**18.** Composition selon la revendication 1 comprenant de plus au moins un élément choisi parmi des agents ignifuges, des agents anti-gouttes, des agents de démoulage de lubrifiants, des agents de nucléation, des antistatiques, des stabilisateurs, des charges, des agents de renforcement, des colorants et des pigments.

**19.** Article moulé comprenant la composition selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3130177 A
- WO 9118052 A1
- WO 9911713 A1
- WO 0039210 A1
- DE S1495626 A
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- US 3243481 A
- US 3509237 A
- US 3660535 A
- US 4221833 A
- US 4239863 A


### Non-patent literature cited in the description


- Ullmann, Encyclopädie der technischen Chemie. 1980, vol. 19, 284